# EUROPÄISCHE PATENTSCHRIFT

(11) **EP 0 486 907 B1**
(45) Veröffentlichungstag und Bekanntmachung des Hinweises auf die Patenterteilung: **05.06.1996**
(21) Anmeldenummer: 91119127.8
(22) Anmeldetag: 11.11.1991
(51) Int. Cl.: F16B 37/04, B60R 11/02

(54) **Vorrichtung zum Befestigen eines elektronischen Gerätes in eine Einbauwand**
Fastener for mounting of an electronic unit in a mounting plate
Dispositif pour fixer une unité électronique dans une plaque de montage

(30) Priorität: 17.11.1990 DE 4036677
(43) Veröffentlichungstag der Anmeldung: 27.05.1992
(73) Patentinhaber: Blaupunkt-Werke GmbH, D-31132 Hildesheim (DE)
(72) Erfinder: Leyder, Klaus, W-3200 Hildesheim (DE)

(56) Entgegenhaltungen:
- WO-A-90/04722
- DE-A- 1 910 167
- DE-U- 8 626 192
- FR-A- 1 599 187
- GB-A- 1 066 829
- US-A- 1 646 368

## Beschreibung

### Stand der Technik

Die Erfindung betrifft eine Vorrichtung zum Befestigen eines elektronischen Gerätes in einer Einbauwand nach dem Oberbegriff des Anspruchs 1.

Für den Einbau eines Autoradios in ein Kraftfahrzeug wird vielfach eine Schnellbefestigung gefordert, die es gestattet, das Autoradio mit wenigen Handgriffen in eine Einbauöffnung, die beispielsweise im Armaturenbrett vorgesehen sein kann, zu befestigen.

Aus der DE-PS 29 03 176 ist es bekannt, ein Einbaugerät, insbesondere ein Autoradio mit vorzugsweise seitlich angeordneten Feder-Rastvorrichtungen zu versehen, mit welchen das Gerät beim Einschieben in einen fest im Kraftfahrzeug montierten Einbaurahmen automatisch einrastet und festgehalten wird. Der Ausbau des Gerätes erfolgt mit einem stiftförmigen Hilfswerkzeug, mit welchem die durch vier Öffnungen in der Gerätevorderseite zugänglichen Rastvorrichtungen entriegelt und das Gerät herausgezogen wird.

Ferner ist aus der WO-A-90/04722 eine Vorrichtung zum Befestigen einer Platte an einer Wand bekannt, wobei Rastnasen an Buchsen aus einem elastischen Kunststoff angeformt sind, die mittels von vorn einsetzbarer Schrauben an der Rückseite der Platte befestigt sind. Bei Befestigung der Platte hintergreifen die Rastnasen ihnen zugeordnete Kanten einer zweiten, bereits an der Wand befestigten Buchse. Solche mehrteiligen Lösungen haben hohe Ma terial- und Herstellungskosten und sind im Vergleich zu solchen Lösungen, die nur eine Buchse benötigen, auch recht montageaufwendig.

Der Erfindung liegt die Aufgabe zugrunde, eine Befestigungsvorrichtung der eingangs genannten Art für ein Autoradio zu schaffen, die einen schnellen Einbau gestattet, jedoch keine zum Ausbau erforderliche Öffnung in der Frontplatte des Radios aufweist.

Diese Aufgabe wird erfindungsgemäß durch die im kennzeichnenden Teil des Anspruchs 1 angegebenen Maßnahmen gelöst.

Die mit der Erfindung erzielten Vorteile bestehen insbesondere darin, daß die Vorrichtung aus wenigen, preisgünstig herstellbaren Teilen besteht, einfach montierbar und leicht lösbar ist, keinen zusätzlichen Halterahmen und keine Entriegelungsöffnungen in der Frontblende des Radios erfordert.

Durch die im Unteranspruch aufgeführten Maßnahmen sind vorteilhafte Ausgestaltungen der im Anspruch 1 angegebenen Vorrichtung möglich.

Ein Ausführungsbeispiel der Erfindung ist in der Zeichnung dargestellt und wird im folgenden näher erläutert.

Es zeigen
- Figur 1: eine Schnittzeichnung und
- Figur 2: die Rückansicht eines Ausschnittes einer Befestigungseinrichtung,
- Figur 3: die Draufsicht,
- Figur 4: eine teilgeschnittene Seitenansicht und
- Figur 5: die Rückansicht einer mit Rastmitteln versehenen Buchse der Befestigungsvorrichtung.

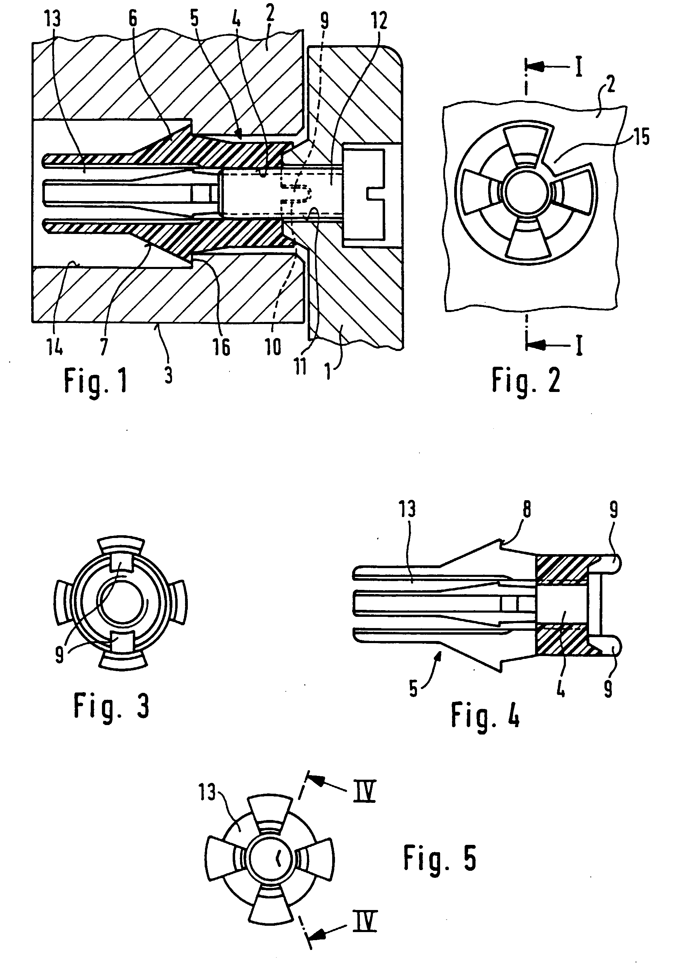

Die Frontplatte 1 eines nicht dargestellten elektronischen Gerätes überragt nach Figur 1 mit ihrem äußeren Abschnitt den Rand einer in einer Einbauwand 2 vorgesehenen Einbauöffnung 3. Eine aus einem elastischen Kunststoff hergestellte, mit einer Gewindebohrung 4 versehene Buchse 5 ist mit vier über ihren Umfang gleichmäßig verteilten Rastnasen 6 versehen, welche Schrägen 7 und senkrecht zur Längsachse der Buchse 5 angeordnete Flächen 8 aufweisen. Die Buchse 5 ist an ihrem der Frontplatte 1 zugewandten Ende mit zwei gegenüberliegend angeordneten Vorsprüngen 9 versehen, denen an der Rückseite der Frontplatte 1 angeordnete Aussparungen 10 zugeordnet sind. Mittels einer in einer Bohrung 11 der Frontplatte 1 vorgesehenen Schraube 12 und der Gewindebohrung 4 ist die in Einbaurichtung angeordnete Buchse 5 verdrehsicher an der Frontplatte 1 befestigt. An ihrem der Frontplatte 1 abgewandten Ende ist die Buchse 5 mit vier gleichen Sektoren umfassenden, schlitzförmigen Aussparungen 13 versehen, die sich bis zur Gewindebohrung 4 erstrecken und die beim Einschieben einen Anschlag für einen in einer Bohrung 14 der Einbauwand 2 angeordneten Vorsprung 15 bilden. Der in eine der Aussparungen 13 hineinragende Vorsprung 15 dient als Verdrehsicherung. Die in der Einbauwand angeordnete Bohrung 14 weist eine zur Frontseite hin abgestufte Verengung auf. Die durch die Abstufung gebildete umlaufende Kante 16 dient als Anschlag für die Flächen 8 der Rastnasen 6.

Zum Befestigen eines elektronischen Gerätes, insbesondere eines Autoradios, in einer Einbauwand wird die Frontplatte 1 mit zwei vormontierten Buchsen 5 versehen, wobei dieses maschinell erfolgen kann. Daraufhin wird das Gerät in die Einbauöffnung 3 der Einbauwand 2 eingeschoben. Hierbei werden die Rastnasen 6 beim Einführen in den engeren vorderen Teil der Bohrungen 14 zusammengedrückt. Nach dem Erreichen der Endlage federn die Rastnasen 6 auf und greifen hinter die umlaufende Kante 16, wodurch das Gerät befestigt wird.

Soll das Gerät beispielsweise aus Reparaturgründen ausgebaut werden, so läßt sich dieses durch einfaches Lösen der Schrauben 12 erreichen. Die Buchsen 5 werden nach dem Ausbauen durch die Vorsprünge 15 verdrehsicher in den Bohrungen 14 gehalten. Ein Wiedereinbau erfolgt durch ein Eindrehen der Schrauben 12, da die Buchsen 5 in den Bohrungen 14 verbleiben.

## Patentansprüche

1. Vorrichtung zum Befestigen eines elektronischen Gerätes in einer Einbauwand, wobei an einer Buchse, die mit dem Gerät mittels von vorn einsetzbarer Schrauben an der Rückseite der Frontplatte verbunden ist, federnd ausgebildete Rastnasen vorgesehen sind, die nach dem Einschieben des Gerätes in eine in der Einbauwand vorgesehene Einbauöffnung auffedern und ihnen zugeordnete, in der Einbauwand vorgesehene Kanten hintergreifen, wobei die Rastnasen (6) in an sich bekannter Weise an einer Buchse (5) aus einem elastischen Kunststoff angeformt sind, wobei die Buchse (5) Mittel zur Festlegung der Lage der Buchse (5) in bezug auf die Einbauwand aufweist, dadurch gekennzeichnet, daß die Buchse (5) an der Seite, die der Einbauwand zugeordnet ist, mindestens eine Aussparung (13) aufweist, welche, beim Einschieben des Gerätes in die Einbau öffnung einen Vorsprung (15), der in der Einbauwand vorgesehen ist, zur Verdrehsicherung umgreift und wodurch auch ein Anschlag für die Buchse in einer vorgegebenen Einschubtiefe gebildet wird, daß die Buchse an der Seite, die der Frontplatte zugeordnet ist, mindestens einen Vorsprung (9) oder eine Aussparung (10) aufweist, daß die Frontplatte mindestens eine Aussparung (10) oder einen Vorsprung (9) aufweist, daß die bei der Verbindung der Buchse mit dem Gerät in den Vorsprung (9) eingreifende Aussparung (10) die Position der der Einbauwand zugeordneten Aussparung (13) auf eine vorgegebene Ausrichtung des Vorsprungs (15) beim Einbau des Gerätes festlegt.

2. Vorrichtung nach Anspruch 1, dadurch gekennzeichnet, daß die Buchse (5) mit vier gleiche Sektoren umfassenden schlitzförmigen Aussparungen (13) versehen ist, die sich, ausgehend vom äußeren Buchsenende, bis zur Gewindebohrung (4) erstrecken und die beim Einschieben einen Anschlag für den in der Bohrung (14) der Einbauwand (2) angeordneten Vorsprung (15) bilden.

## Claims

1. Device for mounting an electronic device in a mounting plate, locking projections which are of sprung construction and which spring open after the insertion of the device into a mounting opening provided in the mounting plate and engage behind edges which are assigned to them and are provided in the mounting plate being provided on a bushing which is connected to the device by means of screws, which can be inserted from the front, on the rear of the front panel, the locking projections (6) being formed onto a bushing (5) which is made from elastic plastic, the bushing (5) having means for securing the position of the bushing (5) with respect to the mounting plate, characterized in that the bushing (5) has at least one recess (13) on the side which is assigned to the mounting plate, which recess (13) engages, during the insertion of the device into the mounting opening, around a projection (15) which is provided in the mounting plate in order to provide protection against rotation, and by means of which recess (13) a stop for the bushing is provided at a predetermined insertion depth, in that the bushing has at least one projection (9) or one recess (10) on the side which is assigned to the front panel, in that the front panel has at least one recess (10) or one projection (9), in that the recess (10) which engages into the projection (9) when the bushing is connected to the device secures the position of the recess (13) which is assigned to the mounting plate with respect to a predetermined alignment of the projection (15) during the mounting of the device.

2. Device according to Claim 1, characterized in that the bushing (5) is provided with slit-shaped recesses (13) which comprise four equal sectors and extend, starting from the outer end of the bushing, as far as the threaded hole (4) and which, during the insertion, form a stop for the projection (15) which is arranged in the hole (14) of the mounting plate (2).

## Revendications

1. Dispositif pour la fixation d'un appareil électronique dans une plaque de montage, une douille reliée à la face arrière de la plaque de montage par l'intermédiaire de vis logées par l'avant de l'appareil, comporte des becs d'accrochage élastiques qui après l'introduction de l'appareil dans une ouverture prévue dans la plaque de montage, se déforment élastiquement et viennent prendre derrière des arêtes prévues dans la plaque de montage, les becs d'accrochage (6) étant réalisés d'une manière connue sur une douille (5) en matière plastique élastique, la douille (5) ayant des moyens pour fixer sa position par rapport à la plaque de montage, caractérisé en ce que la douille (5) comporte d'un côté associé à la plaque de montage, au moins une découpe (13) qui lorsqu'on glisse l'appareil dans l'ouverture de montage vient prendre pour le blocage en rotation dans une saillie (15) prévue dans la plaque de montage, ce qui forme également une butée pour la douille pour une profondeur d'enfoncement prédéterminée, la douille ayant du côté associé à la plaque frontale au moins une saillie (9) ou une découpe (10), la plaque frontale ayant une découpe (10) ou une saillie (9) et la découpe qui vient prendre dans la saillie (9) lorsqu'on relie la douille à l'appareil, fixe la position de la découpe (13) associée à la plaque de montage sur un alignement prédéterminé de la saillie (15) au montage de l'appareil.

2. Dispositif selon la revendication 1, caractérisé en ce que la douille (5) comporte quatre découpes (13) en forme de fente correspondant à des secteurs égaux et qui partant de l'extrémité extérieure de la douille s'étendent jusqu'au taraudage (4) et qui lors de l'introduction, forment une butée pour la saillie (15) prévue dans le perçage (14) de la plaque de montage (2).
